# EUROPEAN PATENT SPECIFICATION

(11) **EP 3 763 074 B1**
(45) Date of publication and mention of the grant of the patent: **30.04.2025**
(21) Application number: 19721422.4
(22) Date of filing: 01.04.2019
(51) Int. Cl.: H04L 5/00, H04B 7/00

(54) **SYSTEM AND METHOD FOR TIME AND FREQUENCY TRACKING SIGNALS WITH TRIGGER-BASED TRANSMISSIONS**
SYSTEM UND VERFAHREN ZUR ZEIT- UND FREQUENZNACHFÜHRUNG VON SIGNALEN MIT TRIGGERBASIERTEN ÜBERTRAGUNGEN
SYSTÈME ET PROCÉDÉ POUR SIGNAUX DE SUIVI DE TEMPS ET DE FRÉQUENCE À L'AIDE D'ÉMISSIONS À BASE DE DÉCLENCHEMENT

(30) Priority: 06.04.2018 US 201862654040 P; 17.05.2018 US 201862672794 P
(43) Date of publication of application: 13.01.2021
(73) Proprietor: Huawei Technologies Co., Ltd., Longgang District Shenzhen Guangdong 518129 (CN)
(72) Inventor: XIAO, Weimin, Hoffman Estates, Illinois 60010 (US); LIU, Jialing, Palatine, Illinois 60067 (US); CHENG, Qian, Naperville, Illinois 60565 (US)
(74) Representative: Gill Jennings & Every LLP
(86) International application number: PCT/US2019/025191
(87) International publication number: WO 2019/195171

(56) References cited:
- MEDIATEK INC: "Summary #2 for TRS", vol. RAN WG1, no. Athens, Greece; 20180226 - 20180302, 5 March 2018 (2018-03-05), XP051398757, Retrieved from the Internet <URL:http://www.3gpp.org/ftp/tsg%5Fran/WG1%5FRL1/TSGR1%5F92/Docs/> [retrieved on 20180305]
- NOKIA ET AL: "Remaining Details of TRS Design", vol. RAN WG1, no. Athens, Greece; 20180226 - 20180302, 16 February 2018 (2018-02-16), XP051397335, Retrieved from the Internet <URL:http://www.3gpp.org/ftp/tsg%5Fran/WG1%5FRL1/TSGR1%5F92/Docs/> [retrieved on 20180216]
- HUAWEI ET AL: "Reference signal for fine time and frequency tracking", vol. RAN WG1, no. Prague, Czech Republic; 20171009 - 20171013, 8 October 2017 (2017-10-08), XP051340498, Retrieved from the Internet <URL:http://www.3gpp.org/ftp/Meetings_3GPP_SYNC/RAN1/Docs/> [retrieved on 20171008]

## Description

### TECHNICAL FIELD

The present disclosure relates generally to a system and method for digital communications, and, in particular embodiments, to a system and method for time and frequency tracking signals with trigger-based transmissions.

### BACKGROUND

For normal wireless communications operations, the tracking functionalities performed by a user equipment (UE) are: fine time tracking, fine frequency tracking, delay spread estimation and Doppler spread estimation.

In fine time tracking, the UE detects the first arriving path and optimally places its Fast Fourier transform (FFT) window to maximize data signal to noise plus inter-symbol interference ratio. In continuous operation, the optimal FFT window position will drift because of UE mobility and residual oscillator error between the transmitter and receiver. The UE adjusts its FFT window placement based on the detected change of path arriving time.

In fine frequency tracking, the UE detects the frequency offset between the transmitter and receiver and adjust its oscillator accordingly. The residual frequency error is estimated and compensated in demodulation of data symbols. The residual error compensation is very critical especially in the case of high signal-to-noise ratio (SNR) and high code rate data transmission. Uncompensated frequency error imposes phase error on the modulated data symbol and results in decoding performance degradation. Because temperature change affects the output precision of oscillator and Doppler shift caused by UE movement, the UE should periodically tracks the frequency offset and apply the corresponding adjustment and compensation.

Delay spread determines how dispersive of the wireless multi-path channel UE experiences. The longer the delay spread, the more frequency selective the channel is. To maximize the potential processing gain along the frequency domain in channel estimation based on the received pilot signal, the UE strives to apply linear filtering with length as long as possible if within the coherent bandwidth. Coherent bandwidth is inversely proportion to its channel selectiveness. Thus delay spread estimation plays an important role in forming channel estimation filter coefficients and length, hence the performance of channel estimation and data demodulation.

Doppler spread is usually proportional to UE movement speed and multi-path spatial distribution. Larger Doppler spread is corresponding to faster changing wireless multi-path fading channel. Channel estimation usually applies the filtering in the time domain with longer filter length to suppress the noise plus interference if within the channel coherent time constraint. Doppler spread estimation is thus another factor along time domain affecting UE channel estimation performance.

MEDIATEK INC: "Summary #2 for TRS",3GPP DRAFT; R1-1803438, 5 March 2018, XP051398757, describes aperiodic TRS triggering and association with periodic TRS.

NOKIA ET AL: "Remaining Details of TRS Design", 3GPP DRAFT; R1-1802563, 16 February 2018, XP051397335, describes different aspects of TRS design related to fine time/frequency tracking RS.

HUAWEI ET AL: "Reference signal for fine time and frequency tracking",3GPP DRAFT; R1-1717308, 8 October 2017, XP051340498, describes reference signal for fine time and frequency tracking.

### SUMMARY

The present invention is defined by the appended claims.

According to a first aspect, a method implemented by an access node is provided. The method includes transmitting, by the access node, a trigger for an aperiodic tracking reference signal (TRS) associated with a periodic TRS, and transmitting, by the access node, the aperiodic TRS in accordance with the trigger.

In a first implementation form of the method according to the first aspect as such, wherein an association between the aperiodic TRS and the periodic TRS comprises the aperiodic TRS and the periodic TRS having a same bandwidth.

In a second implementation form of the method according to the first aspect as such or any preceding implementation form of the first aspect, wherein an association between the aperiodic TRS and the periodic TRS comprises the aperiodic TRS and the periodic TRS having a quasi-co-located (QCL) relationship.

In a third implementation form of the method according to the first aspect as such or any preceding implementation form of the first aspect, wherein the aperiodic TRS comprises a set of 4 one-port channel state information reference (CSI-RS) resources in two consecutive slots.

In a fourth implementation form of the method according to the first aspect as such or any preceding implementation form of the first aspect, wherein a first two CSI-RS resources in the set of 4 one-port CSI-RS resources is in a first slot of the two consecutive slots.

In a fifth implementation form of the method according to the first aspect as such or any preceding implementation form of the first aspect, further comprising configuring, by the access node, a user equipment (UE) with multiple sets of aperiodic TRSs for different QCL assumptions.

In a sixth implementation form of the method according to the first aspect as such or any preceding implementation form of the first aspect, wherein the UE is further configured with multiple sets of aperiodic TRSs for different DMRS ports, or different CSI-RS ports.

According to a second aspect, a method implemented by a UE is provided. The method includes receiving, by the UE, a trigger for an aperiodic TRS associated with a periodic TRS, and receiving, by the UE, the aperiodic TRS in accordance with the trigger.

In a first implementation form of the method according to the second aspect as such, wherein an association between the aperiodic TRS and the periodic TRS comprises the aperiodic TRS and the periodic TRS having a same bandwidth.

In a second implementation form of the method according to the second aspect as such or any preceding implementation form of the second aspect, wherein an association between the aperiodic TRS and the periodic TRS comprises the aperiodic TRS and the periodic TRS having a QCL relationship.

In a third implementation form of the method according to the second aspect as such or any preceding implementation form of the second aspect, wherein the aperiodic TRS comprises a set of 4 one-port CSI-RS resources in two consecutive slots.

In a fourth implementation form of the method according to the second aspect as such or any preceding implementation form of the second aspect, wherein a first two CSI-RS resources in the set of 4 one-port CSI-RS resources is in a first slot of the two consecutive slots.

In a fifth implementation form of the method according to the second aspect as such or any preceding implementation form of the second aspect, further comprising receiving, by the UE, a configuration message with multiple sets of aperiodic TRSs for different QCL assumptions.

In a sixth implementation form of the method according to the second aspect as such or any preceding implementation form of the second aspect, wherein the configuration message further comprises multiple sets of aperiodic TRSs for different DMRS ports, or different CSI-RS ports.

According to a third aspect, an access node is provided. The access node includes a non-transitory memory storage comprising instructions, and one or more processors in communication with the memory storage. The one or more processors execute the instructions to transmit a trigger for an aperiodic TRS associated with a periodic TRS, and transmit the aperiodic TRS in accordance with the trigger.

In a first implementation form of the access node according to the third aspect as such, wherein an association between the aperiodic TRS and the periodic TRS comprises the aperiodic TRS and the periodic TRS having a same bandwidth.

In a second implementation form of the access node according to the third aspect as such or any preceding implementation form of the third aspect, wherein an association between the aperiodic TRS and the periodic TRS comprises the aperiodic TRS and the periodic TRS having a QCL relationship.

In a third implementation form of the access node according to the third aspect as such or any preceding implementation form of the third aspect, wherein the aperiodic TRS comprises a set of 4 one-port CSI-RS resources in two consecutive slots.

In a fourth implementation form of the access node according to the third aspect as such or any preceding implementation form of the third aspect, wherein a first two CSI-RS resources in the set of 4 one-port CSI-RS resources is in a first slot of the two consecutive slots.

In a fifth implementation form of the access node according to the third aspect as such or any preceding implementation form of the third aspect, wherein the one or more processors further execute the instructions to configure a UE with multiple sets of aperiodic TRSs for different QCL assumptions.

In a sixth implementation form of the access node according to the third aspect as such or any preceding implementation form of the third aspect, wherein the one or more processors further execute the instructions to configure the UE with multiple sets of aperiodic TRSs for different DMRS ports, or different CSI-RS ports.

According to a fourth aspect, a UE is provided. The UE includes a non-transitory memory storage comprising instructions, and one or more processors in communication with the memory storage. The one or more processors execute the instructions to receive a trigger for an aperiodic TRS associated with a periodic TRS, and receive the aperiodic TRS in accordance with the trigger.

In a first implementation form of the UE according to the fourth aspect as such, wherein an association between the aperiodic TRS and the periodic TRS comprises the aperiodic TRS and the periodic TRS having a same bandwidth.

In a second implementation form of the UE according to the fourth aspect as such or any preceding implementation form of the fourth aspect, wherein an association between the aperiodic TRS and the periodic TRS comprises the aperiodic TRS and the periodic TRS having a QCL relationship.

In a third implementation form of the UE according to the fourth aspect as such or any preceding implementation form of the fourth aspect, wherein the aperiodic TRS comprises a set of 4 one-port CSI-RS resources in two consecutive slots.

In a fourth implementation form of the UE according to the fourth aspect as such or any preceding implementation form of the fourth aspect, wherein a first two CSI-RS resources in the set of 4 one-port CSI-RS resources is in a first slot of the two consecutive slots.

In a fifth implementation form of the UE according to the fourth aspect as such or any preceding implementation form of the fourth aspect, wherein the one or more processors further execute the instructions to receive a configuration message with multiple sets of aperiodic TRSs for different QCL assumptions.

In a sixth implementation form of the UE according to the fourth aspect as such or any preceding implementation form of the fourth aspect, wherein the configuration message further comprises multiple sets of aperiodic TRSs for different DMRS ports, or different CSI-RS ports.

An advantage of a preferred embodiment is that a flexible aperiodic TRS is provided. The flexibility of an aperiodic TRS is achieved without incurring high UE complexity. Additionally, a well define behavior for the UE is provided.

### BRIEF DESCRIPTION OF THE DRAWINGS

For a more complete understanding of the present disclosure, and the advantages thereof, reference is now made to the following descriptions taken in conjunction with the accompanying drawings, in which:
Figure 1A illustrates a general TRS burst structure;
Figure 1B illustrates a general aperiodic TRS burst structure highlighting a triggering of the aperiodic TRS burst;
Figure 1C illustrates a general TRS burst structure with both periodic and aperiodic TRS bursts;
Figure 2 illustrates a communications system, highlighting communications over different narrow beams;
Figure 3A illustrates a diagram highlighting the QCL assumption among 5G NR reference signals and a wide TRS beam;
Figure 3B illustrates a diagram highlighting the QCL assumption among 5G NR reference signals and a narrow TRS beam;
Figure 4 illustrates an example TRS configuration aggregated from four one-port CSI-RSs according to example embodiments presented herein;
Figure 5 illustrates an example TRS configuration according to example embodiments presented herein;
Figures 6A and 6B illustrate example sets of aggregated one-port CSI-RS configurations according to example embodiments presented herein;
Figure 7 illustrates a flow diagram of example operations occurring in an access node transmitting an aperiodic TRS burst associated with a periodic TRS according to example embodiments presented herein;
Figure 8 illustrates a flow diagram of example operations occurring in a UE receiving an aperiodic TRS burst associated with a periodic TRS according to example embodiments presented herein;
Figure 9 illustrates an example communication system according to example embodiments presented herein;
Figures 10A and 10B illustrate example devices that may implement the methods and teachings according to this disclosure according to example embodiments presented herein;
Figure 11 is a block diagram of a computing system that may be used for implementing the devices and methods disclosed herein according to example embodiments presented herein; and
Figure 12 illustrates an example wireless communications system according to example embodiments presented herein.

### DETAILED DESCRIPTION OF ILLUSTRATIVE EMBODIMENTS

The making and using of the disclosed embodiments are discussed in detail below. It should be appreciated, however, that the present disclosure provides many applicable concepts that can be embodied in a wide variety of specific contexts. The specific embodiments discussed are merely illustrative of specific ways to make and use the embodiments, and do not limit the scope of the disclosure.

In Third Generation Partnership Project (3GPP) Long Term Evolution (LTE) compliant communications systems, a cell specific reference signal (CRS) is always transmitted in each subframe, providing high density reference signals in both the time and frequency domains. Fine time and frequency synchronization could be derived for signaling and data demodulations based on CRS reception. In the Fifth Generation (5G) New Radio (NR) technical standards, the always-on CRS is removed to eliminate pilot signal pollution, reduce interference, and facilitate cell on/off operations. Without the CRS, new UE specific time and frequency tracking reference signal (TRS) will be introduced to replace CRS tracking functionalities.

3GPP TS 38.214 describes the definition and configuration of QCL and is incorporate into this application. In particular, The UE can be configured with up to M *TCI-States* by higher layer signalling to decode PDSCH according to a detected PDCCH with DCI intended for the UE and the given serving cell, where M depends on the UE capability. Each configured TCI state includes one RS set *TCI-RS-SetConfig.* Each *TCI-RS-SetConfig* contains parameters for configuring quasi co-location relationship between the reference signals in the RS set and the DM-RS port group of the PDSCH. The RS set contains a reference to either one or two DL RSs and an associated quasi co-location type (QCL-Type) for each one configured by the higher layer parameter *QCL-Type.* For the case of two DL RSs, the QCL types shall not be the same, regardless of whether the references are to the same DL RS or different DL RSs. The quasi co-location types indicated to the UE are based on the higher layer parameter *QCL-Type* and may take one or a combination of the following types:
- 'QCL-TypeA': {Doppler shift, Doppler spread, average delay, delay spread}
- 'QCL-TypeB': {Doppler shift, Doppler spread}
- 'QCL-TypeC': {average delay, Doppler shift}
- 'QCL-TypeD': {Spatial Rx parameter}.

As disclosed in 3GPP TS 38.321, the UE receives an activation command used to map up to 8 TCI states to the codepoints of the DCI field "Transmission Configuration Indication'. After a UE receives [initial] higher layer configuration of TCI states and before reception of the activation command, the UE may assume that the antenna ports of one DM-RS port group of PDSCH of a serving cell are spatially quasi co-located with the SSB determined in the initial access procedure with respect to Doppler shift, Doppler spread, average delay, delay spread, spatial Rx parameters, where applicable.

If a UE is configured with the higher layer parameter *TCI-PresentInDCI* that is set as 'Enabled' for the CORESET scheduling the PDSCH, the UE assumes that the TCI field is present in the DL DCI of the PDCCH transmitted on the CORESET. If *TCIPresentInDCI* is set as 'Disabled' for the CORESET scheduling the PDSCH or the PDSCH is scheduled by a DCI format 1_0, for determining PDSCH antenna port quasi co-location, the UE assumes that the TCI state for the PDSCH is identical to the TCI state applied for the CORESET used for the PDCCH transmission.

If the *TCI-PresentinDCI* is set as 'Enabled', the UE shall use the *TCI-States* according to the value of the *"Transmission Configuration Indication'* field in the detected PDCCH with DCI for determining PDSCH antenna port quasi co-location. The UE may assume that the antenna ports of one DM-RS port group of PDSCH of a serving cell are quasi co-located with the RS(s) in the RS set with respect to the QCL type parameter(s) given by the indicated TCI state if the time offset between the reception of the DL DCI and the corresponding PDSCH is equal to or greater than a threshold *Threshold-Sched-Offset,* where the threshold is based on UE capability. For both the cases when *TCI-PresentInDCI* = 'Enabled' and *TCI-PresentInDCI* = 'Disabled', if the offset between the reception of the DL DCI and the corresponding PDSCH is less than the threshold *Threshold-Sched-Offset,* the UE may assume that the antenna ports of one DM-RS port group of PDSCH of a serving cell are quasi co-located based on the TCI state used for PDCCH quasi co-location indication of the lowest *CORESET_ID* in the latest slot in which one or more CORESETs are configured for the UE. If all configured TCI states do not contain 'QCL-TypeD', the UE shall obtain the other QCL assumptions from the indicated TCI states for its scheduled PDSCH irrespective of the time offset between the reception of the DL DCI and the corresponding PDSCH.

A UE should expect only the following *QCL-Type* configurations in TCI-RS-Set:
- If a CSI-RS resource is in a CSI-RS resource set configured with higher layer parameter *TRS-Info,* the UE should only expect 'QCL-TypeC' or {'QCL-TypeC' and 'QCL-TypeD'} configurations with SS/PBCH block or 'QCL-TypeD' with a CSI-RS resource in a CSI-RS resource set configured with higher layer parameter *CSI-RS-ResourceRep.*
- If a CSI-RS resource is in a CSI-RS resource set configured without higher layer parameter *TRS-Info* and without *CSI-RS-ResourceRep,* the UE should only expect 'QCL-'rypeA' or 'QCL-TypeB' configuration with a CSI-RS resource in a CSI-RS resource set configured with higher layer parameter *TRS-Info* or 'QCL-TypeD' with a CSI-RS resource in a CSI-RS resource set configured with higher layer parameter *CSI-RS-ResourceRep.*
- If a CSI-RS resource in a CSI-RS resource set is configured with higher layer parameter *CSI-RS-ResourceRep,* the UE should only expect 'QCL-TypeA' configuration with CSI-RS in a CSI-RS resource set configured with higher layer parameter *TRS-Info* or {'QCL-TypeC' and 'QCL-TypeD'} configurations with SS/PBCH block or {QCL-TypeD} with a CSI-RS resource in a CSI-RS resource set configured with higher layer parameter *CSI-RS-ResourceRep.*
- For the DM-RS of CORESET scheduling the PDSCH, the UE should only expect 'QCL-TypeA' configuration with a CSI-RS resource in a CSI-RS resource set configured with higher layer parameter *TRS-Info* or {'QCL-TypeA' and 'QCL-TypeD'} configuration with SS/PBCH block if UE is not configured with CSI-RS in a CSI-RS resource set configured with higher layer parameter *TRS-Info* or 'QCL-TypeD' with a CSI-RS resource in a CSI-RS resource set configured with higher layer parameter *CSI-RS-ResourceRep.*
- For the DM-RS of PDSCH, the UE should only expect 'QCL-TypeA' configuration with a CSI-RS resource in a CSI-RS resource set configured without higher layer parameter *TRS-Info* and without *CSI-RS-ResourceRep* or 'QCL-TypeA' configuration with a CSI-RS resource in a CSI-RS resource set configured with higher layer parameter *TRS-Info* or {'QCL-TypeA' and 'QCL-TypeD'} configuration with SS/PBCH block if UE is not configured with a CSI-RS resource in a CSI-RS resource set with higher layer parameter *TRS-Info* or 'QCL-TypeD' with a CSI-RS resource in a CSI-RS resource set configured with higher layer parameter *CSI-RS-ResourceRep* or {'QCL-TypeA' and 'QCL-TypeD'} configuration with CSI-RS resource in a CSI-RS resource set configured without higher layer parameter *TRS-Info* and without *CSI-RS-ResourceRep.*

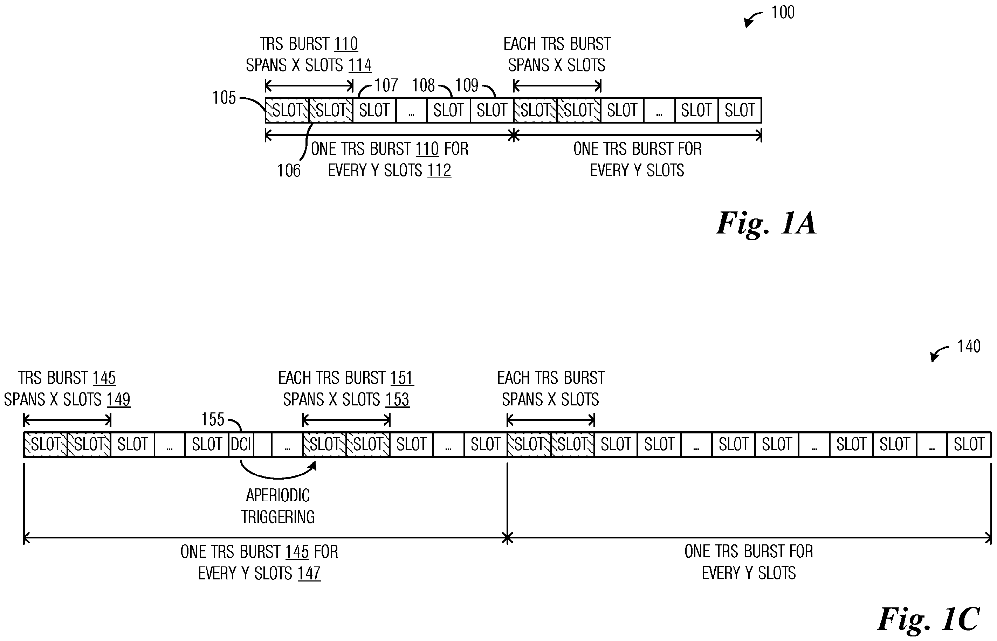

Figure 1A illustrates a general TRS burst structure 100. Structure 100 displays an example TRS burst structure over a plurality of slots, such as slots 105, 106, 107, 108, and 109. In general, the TRS burst is a periodic reference signal that occurs once every specified number of slots. As shown in Figure 1A, there is one TRS burst (e.g., TRS burst 110) for every Y slots (e.g., Y slots 112), where Y is an integer value. Additionally, the TRS burst spans one or more slots. As shown in Figure 1A, a TRS burst (e.g., TRS burst 110) spans X slots (e.g., X slots 114), where X is an integer value and is smaller than Y. Although illustrated in Figure 1A as spanning 2 slots, the TRS burst may span any number of slots. Furthermore, the TRS burst may occur in non-contiguous slots.

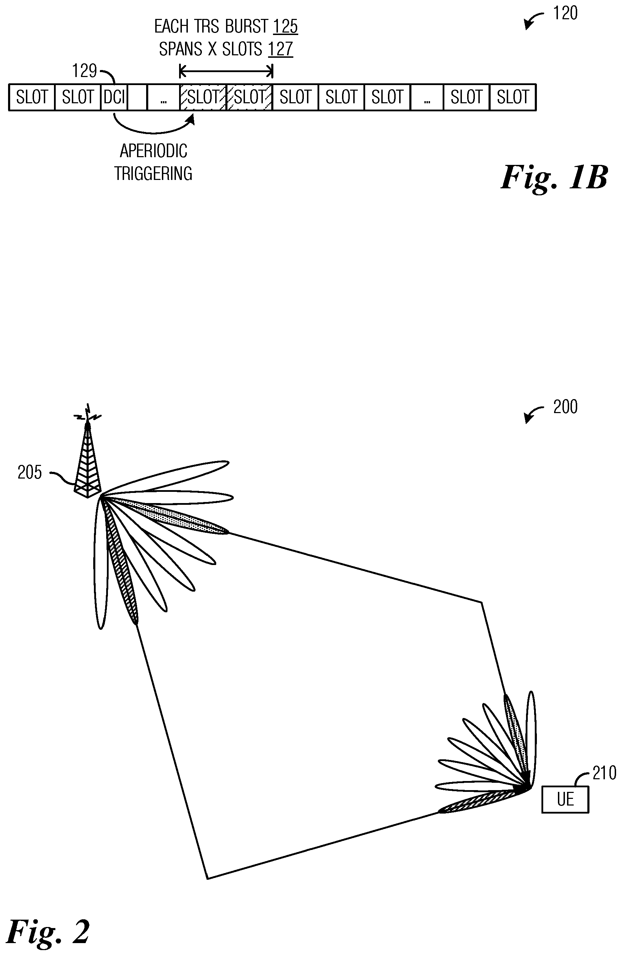

Figure 1B illustrates a general aperiodic TRS burst structure 120 highlighting a triggering of the aperiodic TRS burst. Structure 120 displays an example aperiodic TRS burst structure, such as aperiodic TRS burst 125, over a plurality of slots. Aperiodic TRS burst 125 spans X slots 127, where X is an integer value. Aperiodic TRS burst 125 may be triggered by a transmission, such as downlink control information (DCI) 129, occurring prior to aperiodic TRS burst 125. The trigger may be an indication in the transmission, such as a flag or a bit sequence. The trigger may also be a dedicated message. As an example, DCI 129 indicates where the TRS message will be located. Subsequent to DCI 129, a receiving device will know when the TRS message is to be transmitted based on the DCI information.

The trigger may occur at any time prior to the aperiodic TRS burst. As an example, the trigger may be transmitted one or more slots before the aperiodic TRS burst, as long as sufficient time is provided for the device receiving the trigger to decode the trigger to determine when to expect the aperiodic TRS burst. Although shown in Figure 1B as occurring in the same carrier as the aperiodic TRS burst, the trigger may be transmitted in a different frequency band or carrier from the aperiodic TRS burst. The trigger may also be in a different code space from the aperiodic TRS burst. Although illustrated in Figure 1B as spanning 2 slots, the aperiodic TRS burst may span any number of slots. Furthermore, the aperiodic TRS may occur in non-contiguous slots.

Figure 1C illustrates a general TRS burst structure 140 with both periodic and aperiodic TRS bursts. Structure 140 displays an example TRS burst structure over a plurality of slots. In general, the TRS burst is a periodic reference signal that occurs once every specified number of slots. As shown in Figure 1C, there is one TRS burst (e.g., TRS burst 145) for every Y slots (e.g., Y slots 147), where Y is an integer value. Additionally, the TRS burst spans one or more slots. As shown in Figure 1C, a TRS burst (e.g., TRS burst 145) spans X slots (e.g., X slots 149), where X is an integer value and is smaller than Y. Although illustrated in Figure 1C as spanning 2 slots, the TRS burst may span any number of slots. Furthermore, the TRS burst may occur in non-contiguous slots.

In addition to the periodic TRS bursts occurring every specified number, e.g., Y, slots, structure 140 also includes an aperiodic TRS burst 151. Aperiodic TRS burst 151 spans one or more slots. Although aperiodic TRS burst 151 is shown in Figure 1C as spanning X slots 153, aperiodic TRS bursts may span different numbers of slots from periodic TRS bursts. Additionally, the aperiodic TRS bursts may occur in non-contiguous slots. Aperiodic TRS burst 151 is triggered by a transmission, such as DCI 155, occurring prior to aperiodic burst 151. The trigger may be an indication in the transmission, such as a flag or a bit sequence. The trigger may also be a dedicated message. In this example, both aperiodic and periodic TRS is disclosed and used with each other. It is further understood that the aperiodic TRS may be associated with the TRS, such that the aperiodic TRS may provide additional information, respond to a trigger event, or be used in response to a change in beamforming conditions.

The structure and transmissions of a TRS burst may be specified using parameters, including but not limited to:
**X:** the length of TRS burst in terms of number of 14-symbol slots;
**Y:** the TRS burst periodicity in ms or number of slots;
**N:** Number of OFDM symbols per TRS within a slot;
**B:** TRS bandwidth in terms of number of RBs;
**S_{f}:** TRS subcarrier spacing; and
**Sₜ:** TRS symbol spacing within a slot.

Different tracking targets may impose different minimum requirements on the time and frequency density of TRS. For example, a TRS used for time and delay spread tracking requires denser pilot in the frequency domain, i.e., a smaller sub-carrier spacing (S_{f}), and a sufficiently wide TRS transmission bandwidth (B). While a TRS used for frequency tracking places less requirements on signal frequency density and transmission bandwidth, but it is desired that the TRS is transmitted on several OFDM symbols with a sufficiently large time spacing **(Sₜ** ) for better phase rotation estimation.

Various usage or deployment scenarios also have impact on the setting of TRS parameters. For example, in a high speed train deployment scenario, the Doppler shift experienced by the UE as it passes its serving access node suddenly changes the sign but remains similar magnitude wise. The absolute difference of these two Doppler shift states is very large due to the UE's fast moving speed. In order to facilitate the UE's estimation of the correct Doppler shift state and application of a corresponding phase compensation, more frequent transmission of the TRS targeting frequency tracking is desired (i.e., a TRS with smaller **Y** and larger **N** parameters). However, system overhead increases with more frequent TRS transmission. Then TRS should be configured in UE-specific manner and transmitted within confined frequency resources.

As discussed previously, an advantage of removing the CRS is reducing overhead and interference in the communications system. Hence, when introducing the TRS for fine time and frequency tracking, consideration should also be taken to avoid adding too much overhead and interference back into the communications system. Therefore, the TRS present in 5G NR communications systems has relatively large periodicity, on the order of 10s of milli-seconds. The TRS introduced in 5G NR communications systems with large periodicity are referred to herein as periodic TRS. Basically, for periodic TRS, the bursts of the TRS transmissions are spaced evenly in time. The longer the periodicity or the larger the spacing between the TRS tranmsission bursts, the lower the overhead and interference introduced in the communications system. However, at the same time, the tracking performance of the TRS signal may degrade with increased periodicity, and vice versa.

In some deployment scenarios, the fast acquisition of fine time and frequency tracking is helpful. As an example, in the case of carrier aggregation (CA) and during serving cell (SCell) activation, the SCell activation may be delayed up to the periodicity of the TRS (up to an additional 80 ms in addition to other SCell activation procedure delays). It may be beneficial for the access node to transmit a burst TRS transmission closely after the UE receives the SCell activation signal so that the UE can obtain time and frequency synchronization without having to wait for the next instance of a periodic TRS transmission. The network may be able to start obtaining channel state information (CSI) information and perform data transmission. The introduction of an aperiodic (e.g., trigger based) TRS for such a situation, in addition to the periodic TRS, may require that the UE monitor both TRSs, which may potentially different. Furthermore, the aperiodic TRS is trigger based and the UE cannot assume that it will occur often enough to ensure good tracking performance.

5G NR also supports wireless communications for high frequency bands, e.g., millimeter-wave spectrum. At the higher frequencies, beam-formed transmission is an important feature necessary to overcome the higher path-loss. Beam-forming will be applied not only to UE specific downlink and uplink transmissions, but also to common channels such as synchronization channels and control channels. Synchronization and control channels are typically transmitted with wider beams for better coverage, while data channels are transmitted with narrower beams for throughput. Depending on the beam width difference, the UE may observe different Doppler shift, delay spread, and Doppler spread. Also, even with the same narrow beam width but with beams oriented to different directions, UE tracking parameters may be different.

Aperiodic TRS may be used in some cases, such as periodic events (e.g., connected discontinuous reception (C-DRX), idle discontinuous reception (I-DRX), and so on) and aperiodic events (e.g., SCell activation, BWP switching, Multi-beam change, and so on).

For aperiodic events, TRS transmissions may be used for Scell activation. Though TRS is not a cell specific RS with guaranteed presence, periodic TRS is a UE implemented feature. Furthermore, a UE in RRC connected mode is expected to receive the higher layer UE specific configuration of a CSI-RS resource set configured with higher layer parameter TRS-Info. Therefore, periodic TRS should be assumed for SCell activation discussion before discussing of the potential benefit and introduction of aperiodic TRS if justified.

The introduction of TRS is mainly for the fine time and frequency tracking as CRS type of signal is not supported in 5G NR in order to reduce overhead and interference in the system. With the same consideration of overhead and interference, the periodicity of TRS is configurable and potentially with large periodicity. In the case of SCell activation, with only periodic TRS with relatively large periodicity, the UE may need to wait for a relatively long time till the next transmission burst of the TRS in order to obtain fine time and frequency information of the channel. An (early) transmission of the TRS may be used to reduce such latency. However, with short TRS periodicity, such issue can be also mitigated to large extend with minor increase of overhead. This is an optimization of the current design and a tradeoff between performance and overall. Therefore, the introduction of aperiodic TRS can be beneficial.

Regarding the C-DRX and I-DRX, with reasonable UE implementation, a UE can keep awake in several TRS symbols and then quickly go back to sleep until C-DRX on. This kind of implementation has similar power consumption compared with introducing several aperiodic TRS symbols before C-DRX on. Also for idle mode, a UE could perform tracking with SSB using similar method.

The latency problem for some cases can be addressed by introducing additional periodicity of TRS, such as 5ms. It is a tradeoff of performance and overhead.

Aperiodic TRS may be complementary to periodic TRS, to achieve certain performance requirements when receiving CSI-RS, PDCCH, and PDSCH, the UE can assume certainty of TRS transmission with some periodicity. Aperiodic TRS may be triggered to transmission in order to speed up certain event with reduced latency. However, it is up to network implementation and the UE cannot assume it will always happen and whether it happens in time. Current specification stated that "A UE in RRC connected mode is expected to receive the higher layer UE specific configuration of a CSI-RS resource set configured with higher layer parameter TRS-Info" and this is for periodic TRS.

Aperiodic TRS when configured can be associated with a periodic TRS configuration. As it is up to network implementation whether and when to trigger aperiodic transmission, UE always needs to be configured with period transmission of TRS. More specifically, aperiodic TRS should not be independently used and configured. An aperiodic TRS transmission is triggered as an early burst of the associated periodic TRS. Afterwards, UE relies on the associated periodic TRS transmissions.

The time domain behavior of periodic TRS and aperiodic TRS can, in some embodiments, be different. A periodic CSI-RS resource set configured with TRS-Info is configured with periodicity and offset in terms of number of slots. The configuration of periodicity and offset is for each of the periodic (and semi-persistent) CSI-RS resource. For the case of TRS with multiple CSI-RS resources in more than 1 timeslot for a transmission burst, different time offset (in term of slot) can be configured to the CSI-RS resources in the set. However, for aperiodic CSI-RS resource, no periodicity and time offset is configured. When a CSI-RS resource set is triggered, the transmission of the CSI-RS resources in the set happens in a same slot according to the triggering slot and an offset value between triggering DCI and the transmission slot noted as aperiodicTriggeringOffset. Therefore, in order to support aperiodic TRS with CSI-RS resources spanning multiple slots, the UE needs to be able to receive the CSI-RS resources on different slots accordingly in order to perform proper time and frequency tracking.

Figure 2 illustrates a communications system 200, highlighting communications over different narrow beams. Communications system 200 includes a access node 205 serving a UE 210. As shown in Figure 2, UE 210 receives downlink transmissions from access node 205 over multiple narrow beams. Although Figure 2 illustrates downlink communications, multiple narrow beams may also be used for uplink transmissions.

The path delay spread and Doppler spread difference between narrow and wide beams may affect the channel estimation performance. A quasi-co-located (QCL) assumption between a demodulation reference signal (DMRS) and a TRS will be different depending upon the conclusion of the QCL assumption between narrow and wide beams. In general, a QCL assumption defines a relationship between two signals, such as reference signals or data signals, such that the two signals may be viewed as possessing similar characteristics. Example characteristics include carrier frequency, time offset, frequency offset, spatial precoding vectors, and so on.

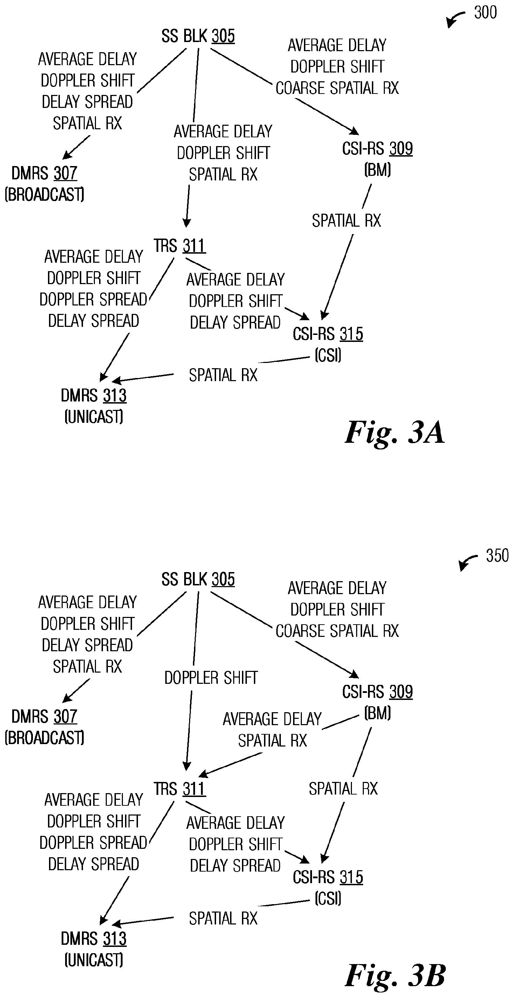

Figure 3A illustrates a diagram 300 highlighting the QCL assumption among 5G NR reference signals and a wide TRS beam. The DMRS for broadcast channel refers to the DMRS that is used for the demodulation of a system information block (SIB), radio resource control (RRC) signaling, paging, and so on, before the TRS is configured. As an example, a UE first accesses the network by detecting a SS block (including synchronization signal and PBCH, for example) 305 and obtains coarse time and frequency information and spatial beamforming information of a usually wide beam width. The UE can then derive QCL parameters (including for example averge delay Doppler shift, delay spread, and spatial RX filter) of a DMRs 307 for broadcast channel. The UE can also derive QCL parameters (including average delay, Doppler shift, and spatial RX filter) for a TRS or CSI-RS 309 for beam management. With the TRS configured and transmitted by the access point, the UE can receive a TRS 311 for fine time and frequency tracking by deriving QCL parameters including average delay, Doppler shift, Doppler spread, and delay spread with potentially higher accuracy for a DMRS 313 for unicast data transmission and a CSI-RS 315 for CSI acquisition. The TRS transmission may use a wide beam width. CSI-RS for beam management may be transmitted with narrow beam width for the UE to obtain spatial RX filter (for DMRS for PDSCH and CSI-RS for CSI acquisition) for narrow transmission beam with higher beamforming gain.

Figure 3B illustrates a diagram 350 highlighting the QCL assumption among 5G NR reference signals and a narrow TRS beam. Because data transmission may employ multiple narrow beams, multiple narrow TRS beams may be required for tracking purposes. In order to support both scenarios, the configuration of the TRS and its QCL association should be flexible. Here, the UE obtains a spatial RX filter for reception of TRS with narrow beam width from CSI-RS 309 for beam management, for example.

Hence, depending on the currently used beam width and a number of narrow beam link pairs used by the UE to communicate, multiple transmissions of the TRS burst may be needed to support tracking for beam-forming purposes. It is not practical to transmit periodic TRS bursts for each beam width and each narrow beam direction. The TRS burst transmission and configuration would, therefore, have to be UE specific and configurable.

According to an embodiment, a TRS burst is used as the source of QCL assumptions for parameters including, but not limited to, Doppler shift, Doppler spread, average delay, delay spread for receiving signals (such as DMRS for physical downlink control channels (PDCCH) and physical downlink shared channels (PDSCH)), channel state information reference signals (CSI-RS), and so on. A UE receives the TRS burst transmission and estimates the channel characteristics, including Doppler shift, Doppler spread, average delay, delay spread, etc., and uses the estimated channel characteristics to receive other signals, including DMRS for PDCCH and PDSCH, CSI-RS, and so forth. The QCL assumptions for a signal may be indicated via the transmission configuration indicator (TCI), for example.

Multiple TCI states may configured to the UE to decode a PDSCH according to a detected PDCCH with DCI intended for the UE. Each TCI state may include one RS set TCI-RS-SetConfig, with each TCI-RS-SetConfig containing parameters for configuring the QCL relationship between the reference signals in the RS set and the DMRS port group of the PDSCH. The RS set includes a reference to either one or two downlink RSs and an associated QCL type (QCL-Type) for each one configured by the higher layer parameter QCL-Type, for example. In the case with two downlink RSs, the QCL types may not be the same, regardless of whether the references are to the same downlink RS or different downlink RSs. Similarly, TCI state (with QCL information) may be configured to the UE to decode the PDCCH or to receive the CSI-RS.

In a situation where a TRS is configured as a source reference signal in a TCI state to receive a DMRS (for the decoding of a corresponding PDSCH or PDCCH, for example) or a CSI-RS resource, the UE may need to receive the bursts of the TRS transmission and keep estimating and updating the channel characteristics. The UE may be configured with multiple TRSs and therefore needs to perform multiple, separate time and frequency tracking procedures for the multiple TRSs. In the situation of an aperiodic (i.e., trigger based) TRS, a separate time and frequency tracking procedure may be performed by the UE, although it may be used for only a short transition interval. After the transition interval, the periodic TRS will be transmitted by the access node and used by the UE. Because the aperiodic TRS and periodic TRS are used for the same purpose, it may be desirable to have an association of some form between the two.

According to an example embodiment, each aperiodic TRS burst is associated with a periodic TRS. The association may include having exactly the same time and frequency configuration, such as bandwidth, resource element (RE) comb location in frequency, subcarrier location in time slots, sequence, and so on. Furthermore, the associated aperiodic TRS burst and periodic TRS may have the same QCL assumptions. As an example, the associated aperiodic TRS burst and periodic TRS may have the same antenna port or share the same antenna port number. As another example, the associated aperiodic TRS burst and periodic TRS may be configured with the same RS set in the TCI state configuration for the UE to derive QCL assumptions. An aperiodic TRS burst itself should not be used as a source reference signal in the RS set in the TCI state because there is no guarantee that the aperiodic TRS burst will be transmitted in time for the UE to derive QCL assumptions.

According to an example embodiment, a CSI-RS resource is configured for time and frequency tracking with higher layer parameter TRS-Info, such as CSI-RS for TRS, to be both periodic and aperiodic at the same time. Basically, a TRS (also referred to as a CSI-RS for TRS in this situation) is a CSI-RS resource set with higher layer parameter TRS-Info is configured with a periodicity and time offset. In addition, a transmission burst of the TRS may also be triggered by DCI in a PDCCH channel. The UE receives the transmissions of the TRS bursts in the slots according to the configuration of periodicity and time offset of the CSI-RS resource set for tracking. When the UE detects a trigger in the DCI in a PDCCH for this TRS, the UE will also receive a transmission of a TRS burst in a slot in accordance with the time of the received trigger information plus an offset value. The offset value may be in the form of a number of slots.

In a situation where beam switching between beams (i.e., a switch from a first beam to a second beam) for DMRS (for decoding of PDSCH or PDCCH) or for CSI-RS, the observed channel characteristics on corresponding antenna port(s) of the signal may change. Hence, time and frequency tracking may need to be adjusted. According to an example embodiment, a transmission of a TRS burst on the second beam is transmitted by the access node for such a purpose. In order for the corresponding TRS burst transmission to reflect the channel characteristics of the DMRS or CSI-RS signals, the transmission beam of the TRS burst may need to be correlated to (at a certain level) or even be the same as the transmission beam of the DMRS or CSI-RS signals. In order for the UE to properly receive the TRS burst (and the DMRS or CSI-RS signals) the spatial QCL information of the receiver may need to be provided to the UE.

In the situation of decoding the PDSCH, the QCL information for its associated DMRS may be provided in the TCI field in the DCI (carried in the PDCCH) that schedules the corresponding PDSCH transmission. Therefore, beam switching for the PDSCH (and its associated DMRS) may occur dynamically as indicated by the TCI field in the DCI as each TCI state my indicate a different beam. For each TCI state, the UE may be configured with a distinctive TRS for fine time and frequency tracking. However, overhead and UE complexity may be increased in only periodic TRSs are used. If trigger based aperiodic TRS bursts are used, the aperiodic TRS burst may be sent to the UE, enabling the UE to receive and estimate fine time and frequency information when the beam is switched.

In the case of beam switching, channel characteristics may change and how the UE uses information derived from the transmissions of the TRS bursts before and after beam switching may be impacted. Hence, the UE should be informed of such a change. According to an example embodiment, a transmission of a trigger based aperiodic TRS burst also indicates to the UE the changes to the TRS burst transmission. Examples of the change may include transmission beam changes, transmission transmit-receive point (TRP) changes, transmission panel changes, timing changes, and so forth. These transmission changes may apply to both the aperiodic and periodic transmission bursts of a TRS when the TRS is configured for both aperiodic and periodic transmissions. Alternatively the transmission changes may apply to the aperiodic TRS as well as its associated periodic TRS. In such a situation, the measurement or estimation of the channel at the UE based on previous TRS burst transmissions may be invalid or not sufficiently accurate. Therefore, when the UE receives triggering information for a transmission of a TRS burst, the UE may not average channel information derived from TRS burst transmissions received prior to the trigger with channel information derived from TRS burst transmissions received after to the trigger. Additionally, the UE may reset the estimation filtering.

According to an example embodiment, explicit information is included with the trigger (i.e., the TRS trigger information) carried in the DCI to indicate whether a change of TRS transmission beam has occurred. When the UE is informed that a change in the TRS transmission beam has occurred, the UE may not average channel information derived from TRS burst transmissions received prior to the trigger with channel information derived from TRS burst transmissions received after to the trigger. Additionally, the UE may reset the estimation filtering.

The same TRS configuration may be used for different beams or different transmission configurations, which can help reduce configuration overhead and RS overhead for UE maintaining multiple beams or for UE switching beams over time. A resetting mechanism based on triggering as described above can be used to avoid wrong filtering, averaging across different beams, transmission configurations, and so forth. A separate signaling may also be adopted, resulting in UE behavior of stopping the averaging from past TRS and resetting the measurement. In any case, the signaling may inform the UE which subset of the QCL properties still hold and can be still averaged and which other QCL properties are reset. For example, the signaling indicates that QCL-Type B ({Doppler shift, Doppler spread}) may still hold for the TRS but other properties in QCL-Type A ({Doppler shift, Doppler spread, average delay, delay spread}, minus those in QCL-Type B) need to be reset. For another example, the signaling indicates that QCL-Type A still holds for the TRS except for those properties in QCL-Type B which need to be reset. The signaling may be applied to periodic or aperiodic TRS upon reception (subject to a delay of a few slots) till a next signaling, or till the end of the TRS burst. On the other hand, multiple TRS configurations may be configured, each associated with a beam or a transmission configuration, with higher signaling or RS overhead.

The reception of a TRS burst transmission also requires receiver spatial QCL information to be provided to the UE. According to an example embodiment, the receiver spatial QCL information may refer to a wide beam (and its associated RS signal, such as a synchronization signal block (SSB) or a CSI-RS) and may not need to change each time a different but narrower beam is used for the TRS burst as long as the wide beam provides sufficient coverage for the reception of the TRS burst. According to another example embodiment, the receiver spatial QCL information may refer to a narrow beam (and its associated signal, such as a CSI-RS) and may need to be adjusted and provided to the UE each time a different but narrower beam is used for the TRS burst in order to support proper reception at the UE. Hence, multiple TCI states with different spatial QCL assumptions (and hence associated RS sets) may be required. These multiple TCI states may be configured for the TRS burst by higher layer signaling, for example.

The trigger signaling in the DCI conveys which TCI state and QCL assumption to be used for TRS burst reception, for example. The UE may then use the indicated TCI state and QCL assumption to receive the triggered aperiodic TRS burst transmission and the following periodic TRS burst transmission. When the indicated TCI state and QCL assumption changes from a prior indicated TCI state and QCL assumption, the UE may not average channel information derived from TRS burst transmissions received before the trigger with channel information derived from TRS burst transmissions received after the trigger. The UE may also reset the estimation filtering.

According to another example embodiment, when the triggering signaling in the DCI conveys which TCI state and QCL assumption is to be used for TRS burst reception, the UE estimates and maintains multiple separate time and frequency tracking information for different TCI states and QCL assumptions. Proper time and frequency tracking information (e.g., Doppler shift, Doppler spread, average delay, delay spread, etc.) is then applied for the reception of DMRS (for PDSCH or PDCCH decoding, for example) or CSI-RS with TCI states and QCL information configured to have the TRS burst as source reference signal in the RS set for TCI states. In order to ensure proper application of the multiple time and frequency tracking information, the TCI states and QCL information of the TRS burst needs to be associated (or mapped) to those of the DMRS or CSI-RS. Higher layer signaling (e.g., RRC or RRC with media access control (MAC) control element (CE)) may be used to configure explicit mappings between the sets of TCI states and QCL information, especially for spatial receiver parameters.

Alternatively, the sets of TCI states and QCL information (especially the spatial receiver QCL parameters) share the same set of RSs for spatial receiver parameters. When receiving a DMRS or CSI-RS, the UE will apply fine time and frequency parameters (e.g., QCL-TypeA with parameters including Doppler shift, Doppler spread, average delay, delay spread, etc.) derived from the TRS burst transmissions that have the same spatial receiver parameters (i.e., QCL-TypeD) as the DMRS or CSI-RS. A certain TCI state and QCL information of the TRS may be used for the reception of the DMRS and CSI-RS when the same spatial receiver parameters (i.e., the RS for QCL-TypeD) is not found for the TRS or no TRS burst transmissions with that particular spatial receiver parameter (i.e., the RS for the QCL-TypeD) has been received by the UE.

Hence, the TRS burst transmission and configuration should be UE specific and configurable. One approach may be to define a new type of signal dedicated for TRS purposes. This approach would lead to the design of a large number of signal patterns, transmission time offsets, and periodicity to cover various tracking target, deployment scenarios, and beam-forming. Furthermore, because the TRS burst transmission may collide with other signals, such as the synchronization signal (SS), DMRS, data, and so on, rules for collision handling and rate matching are also needed.

According to an example embodiment, the TRS is formed by aggregating multiple one-port signals of existing CSI-RSs. The aggregated signal is regarded as the new one-port TRS serving one or more specific tracking functionalities. The new TRS may be assumed to have coarse QCL with 5G NR SS (NR-SS) bursts in some aspects. As an example, the configured TRS may be assumed to be QCL with NR-SS burst in terms of frequency offset and coarse time or Doppler spread. The new TRS may also be assumed to be QCL with certain DMRS ports for UE channel estimation and data demodulation, e.g., in terms of fine time, delay spread, and Doppler spread. The aggregation of one-port CSI-RSs allows for the flexible configuration and satisfaction of a TRS density requirement, as well as the reuse of all CSI-RS design aspects, such as flexible periodicity, rate matching, collision rules, multiple configurations, etc. The aggregation of multiple one-port CSI-RSs leaves only the design of aggregation rules, aggregation signaling, QCL assumptions, and the signaling of the QCL assumptions. Therefore, the design and implementation complexities are reduced.

In an embodiment, in a situation where multiple TRS are configured for a UE, the QCL assumptions, including the related QCL parameters and its associated ports (e.g., DMRS port(s) or CSI-RS port(s) for CSI measurement) are signaled from the network to the UE. In an embodiment, a UE receiving the signaling of the TRS configuration, and QCL assumption and association, derives the QCL parameters from the associated TRS signals and applies them on the reception of corresponding DMRS port(s) or CSI-RS port(s).

According to an example embodiment, a TRS that is an aggregation of one-port time domain code division multiplexed (CDM) CSI-RSs is provided. As an example utilizing 3GPP LTE one-port time domain CDM CSI-RS pattern, it is possible to configure a TRS by aggregating four one-port CSI-RS configurations: Co | C2 | C10 | C14. The aggregation may follow aggregation rules, including but not limited to:
- A resulting TRS signal in one orthogonal frequency division multiplexed (OFDM) symbol should be evenly spaced in the frequency domain.
- The adjacent OFDM symbols carrying the TRS should satisfy the following:
   - The minimum distance: *S_{t_min}< = Nₘᵢₙ*
   - The maximum distance: *N_{max_l} = <S_{t_max}< = N*_{*max_*r}
   - *Nₘᵢₙ, N_{max_l}* and *N_{max_r}* depending on tracking target and tracking scenarios.
- The subcarriers in each TRS carrying OFDM symbol are aligned along frequency domain.
- TRS transmission periodicity configuration is 25 RBs.
- TRS transmission periodicity configuration is 10ms.
- The configured TRS is assumed to be QCL with SS with respect to coarse time or Doppler spread and fine frequency offset.
- The configured TRS is assumed to be QCL with certain DMRS ports with respect to fine time or Doppler spread and fine frequency offset.
- UE should assume the aggregated TRS signal as one-port signal and assist channel estimation and data demodulation follow the signaled QCL assumptions only.

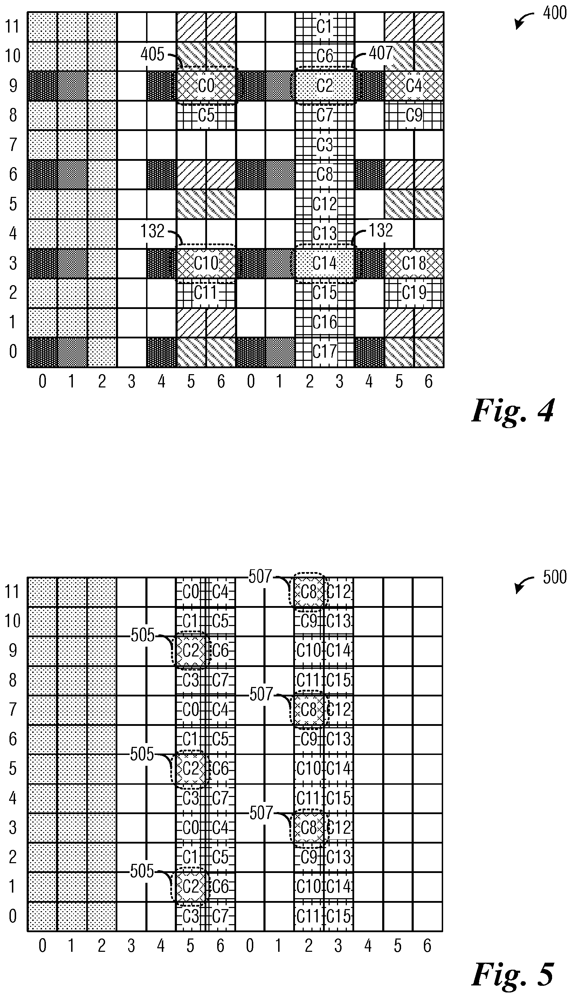

Figure 4 illustrates an example TRS configuration 400 aggregated from four one-port CSI-RSs. As shown in Figure 4, the TRS is configured using four CSI-RS configurations, Co 405, C2 407, C10 409, and C14 411. The TRS is configured in accordance with the aggregation rules shown above.

According to an example embodiment, a TRS that is an aggregation of 5G NR one-port non-CDM CSI-RSs is provided. In order to facilitate beam management and time or frequency tracking, 5G NR may define one-port non-CDM CSI-RSs. The number of resource elements (REs) per resource block (RB) and per OFDM symbol is greater than 3. Figure 5 illustrates an example TRS configuration 500. TRS configuration 500 illustrates a configuration with four REs per RB per OFDM symbol. Such a TRS configuration may be an aggregation of two one-port non-CDM CSI-RS configurations: C2 505 and C8 507, for example. The aggregation may follow aggregation rules, including but not limited to:
- The resulting TRS signals in one OFDM symbol are evenly spaced in frequency domain which should be naturally satisfied by the design of one-port, non-CDM CSI-RS. While if a denser TRS in frequency is needed, additional one-port, non-CDM CSI-RS configurations may be aggregated along the frequency domain as long as the evenly spaced condition still holds.
- The adjacent OFDM symbols carrying TRS should satisfy certain rule:
   - The distance: ***Nₗ =< Sₜ< = Nᵣ***
- The subcarriers in each TRS carrying OFDM symbol are staggered along frequency domain to increase the frequency resolution.
- TRS transmission periodicity configuration is 50 RBs.
- TRS transmission periodicity configuration is 160ms.
- The configured TRS is assumed to be QCL with SS with respect to coarse time or delay spread.
- The configured TRS is assumed to be QCL with certain DMRS ports with respect to fine time or delay spread.
- The UE should assume the aggregated TRS signal to be a one-port signal and assist channel estimation and data demodulation follow the signaled QCL assumptions only.

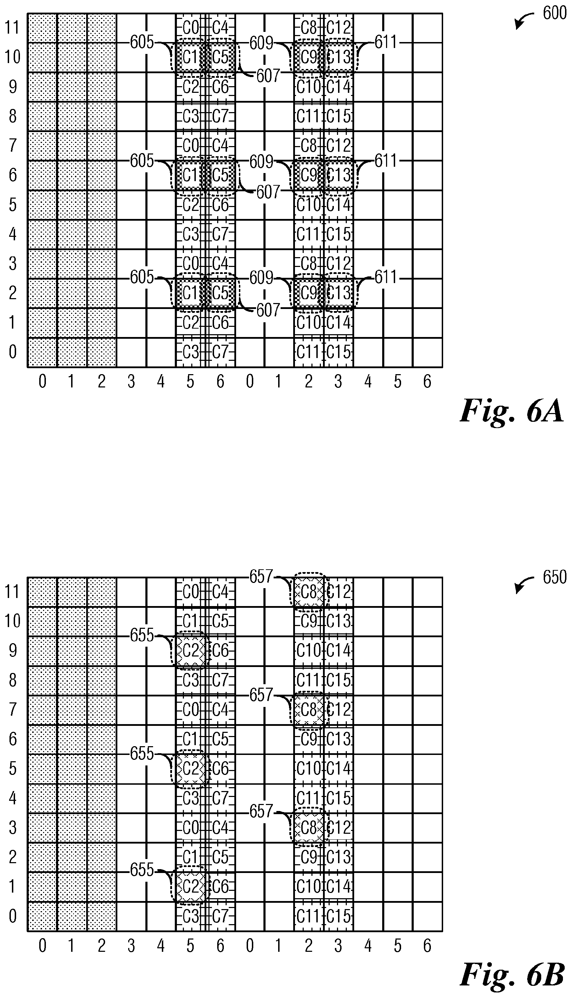

According to an example embodiment, in accordance with the present invention, a TRS that comprises multiple sets of an aggregation of one-port CSI-RSs is provided. A UE may be configured with a TRS that comprises multiple sets of aggregated one-port CSI-RS for tracking different parameters. Figures 6A and 6B illustrate example sets of aggregated one-port CSI-RS configurations 600 and 650. Aggregation 600 is shown in Figure 6A as an aggregation of four one-port non-CDM CSI-RSs: C1 605, C5 607, C9 609, and C13 611, with a transmission periodicity of 20 ms. QCL assumptions related to aggregation 600 include: fine frequency offset to SS block k, coarse time or Doppler spread to SS block k, fine frequency offset, time and Doppler spread to DMRS port m. Aggregation 650 is shown in Figure 6B as an aggregation of three one-port non-CDM CSI-RSs: C2 655 and C8 657, with a transmission periodicity of 160 ms. QCL assumptions related to aggregation 650 include: coarse QCL with SS block k with respect to delay spread, and fine delay spread with DMRS port m.

According to an example embodiment, the TRS configuration through the aggregation of one-port CSI-RSs include:
1. The UE receives one or more SS blocks and acquires coarse time and frequency synchronization.
2. The network signals the UE with the configurations of the TRS using higher layer signaling (e.g., RRC signaling) or broadcast messages. The signaling includes information, such as, aggregation details, QCL assumptions, and transmission periodicity.
3. The UE receives and decodes the higher layer signaling or broadcast messages utilizing the coarse time and frequency synchronizations, and acquires the TRS configuration and prepares to receive the TRS.
4. The network periodically transmits the TRS with the configurations.
5. The UE receives the periodic TRS transmissions and performs further synchronization and parameter estimations, possibly based on coarse QCL assumptions to SS and achieves coarse synchronization.
6. The network transmits data with QCL assumptions to certain TRS configuration(s).
7. The UE performs channel estimation and data demodulation with the assistance of QCL assumptions to certain TRS configuration(s).
8. The network may signal to the UE (using higher layer signaling, for example) that the current TRS configuration will expire within a certain time period.
9. The network stops sending the periodic TRS to the UE.
10. The UE falls back to the coarse synchronization derived from the SS bursts.
11. The UE may try to perform channel estimation and demodulation only with coarse synchronization in the absence of the TRS configuration and transmission.

According to an example embodiment, a UE that is in RRC connected mode receives higher layer UE specific configuration of a CSI-RS resource set configured with higher layer parameter TRS-Info. When a UE is configured with the higher layer parameter TRS-Info, the UE assumes the antenna port with the same port index of the configured non-zero power (NZP) CSI-RS resources in the CSI-RS resource set is the same. As an example, in frequency range 1, the UE may be configured with a CSI-RS resource set of four periodic CSI-RS resources in two consecutive slots with two periodic CSI-RS resources in each slot. As another example, in frequency range 2, the UE may be configured with a CSI-RS resource set of two periodic CSI-RS resources in one slot or with a CSI-RS resource set of four periodic CSI-RS resources in two consecutive slots in two periodic CSI-RS resources in each slot.

In an embodiment, the periodic CSI-RS resources in the CSI-RS resource set configured with higher layer parameter TRS-Info have the same periodicity, bandwidth, and subcarrier location.

In a deployment supporting unlicensed spectrum, a contention based channel access mechanism needs to be used before the channel is used for transmission. As an example, the communication device will listen before talk (LBT) where the communication device first senses the channel before it starts a transmission. The communication device will start the transmission only if it senses that the channel is idle. With such an access mechanism, periodic transmission may not be feasible because the channel may not always be available for transmission due to contention with other communication devices. Therefore, an aperiodic TRS burst transmission may be used without association with a periodic TRS. In an embodiment, the aperiodic TRS burst may be triggered by DCI in a PDCCH where TCI state and QCL information or explicity indication of change of transmission may also be conveyed therein. In another embodiment, the aperiodic TRS burst may be transmitted by the access node after a LBT without sending an explicit trigger. In such a situation, the UE will perform blind detection for TRS transmissions. TCI state and QCL information of the aperiodic TRS burst is configured by higher layer signaling. In order to inform the UE of the change of transmission of the TRS burst including TCI state and QCL information, DCI for data channel (e.g., PDSCH or PUSCH) or MAC CE may be used.

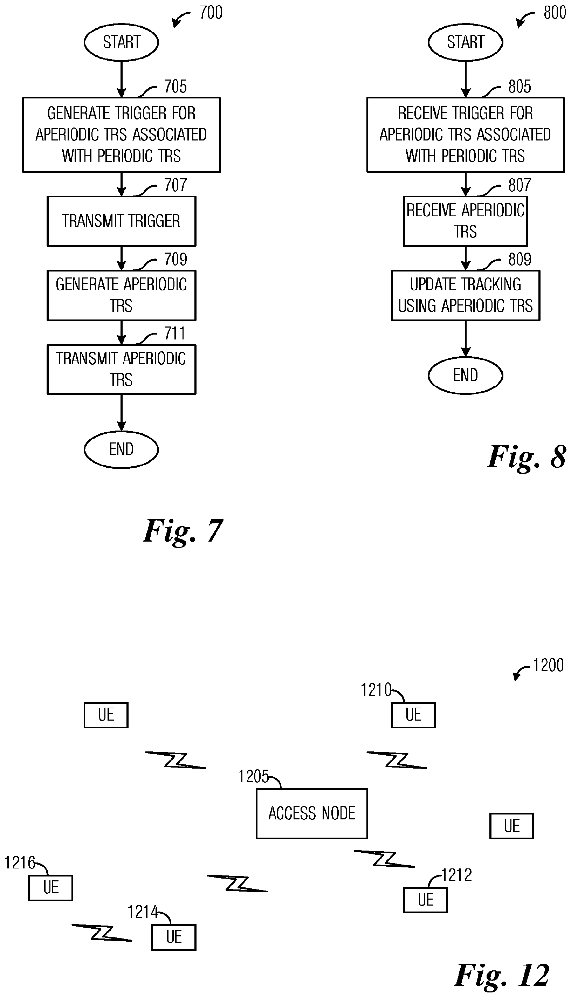

Figure 7 illustrates a flow diagram of example operations 700 occurring in an access node transmitting an aperiodic TRS burst associated with a periodic TRS. Operations 700 may be indicative of operations occurring in an access node as the access node transmits an aperiodic TRS burst that is associated with a periodic TRS.

Operations 700 begin with the access node generating a trigger for an aperiodic TRS burst (block 705). The aperiodic TRS burst is associated with a periodic TRS that is transmitted by the access node. The association between the aperiodic TRS burst and the periodic TRS may include the two having exactly the same time and frequency configuration, such as bandwidth, RE comb location in frequency, subcarrier location in time slots, sequence, and so on. Furthermore, the associated aperiodic TRS burst and periodic TRS have the same QCL assumptions. The access node transmits the trigger (block 707). The trigger may be transmitted in a DCI. The trigger may be transmitted in a message. The trigger may be transmitted using higher layer signaling. The access node generates the aperiodic TRS burst (block 709). As an example, in accordance with the present invention, the aperiodic TRS burst may be generated from an aggregation of one-port CSI-RSs. The access node transmits the aperiodic TRS burst (block 711).

Figure 8 illustrates a flow diagram of example operations 800 occurring in a UE receiving an aperiodic TRS burst associated with a periodic TRS. Operations 800 may be indicative of operations occurring in a UE as the UE receives an aperiodic TRS burst that is associated with a periodic TRS.

Operations 800 begin with the UE receiving a trigger for an aperiodic TRS burst transmission that is associated with a periodic TRS (block 805). The trigger may be received in a DCI. The trigger may be received in a message. The trigger may be received using higher layer signaling. The UE receives the aperiodic TRS burst (block 807). The aperiodic TRS burst is received in accordance with the trigger. The UE updates its tracking using the received aperiodic TRS burst (block 809).

In an embodiment, in accordance with the present invention, relative slot offset of each CSI-RS resources of the aperiodic CSI-RS resource set is configured. For example, with 4 aperiodic CSI-RS resources for a TRS, 2 of the aperiodic CSI-RS resources are configured with relative offset of zero slot and the other 2 with relative offset of one slot. When the UE receives triggering information through detection of DCI in PDCCH, the CSI-RS resources are transmitted by the gNB according to the triggering timing (where DCI is and noted as slot n) and the offset value (noted as k slots or aperiodicTriggeringOffset) between triggered DCI and the first transmission slot (noted as slot n+k). The CSI-RS resource with the relative slot offset value configured as zero will be transmitted in the first transmission slot, i.e. slot n+k. The CSI-RS resource with the relative slot offset value configured as one will be transmitted in the next slot after the first transmission slot, i.e. slot n+k+1. In general, The CSI-RS resource with the relative slot offset value configured as m will be transmitted in the m-th slot after the first transmission slot, i.e. slot n+k+m. The UE then receives the CSI-RS resources of the TRS accordingly.

In another embodiment, relative slot offset of each CSI-RS resources of the aperiodic CSI-RS resource set is obtained implicitly without configuration signaling. For example, with 4 aperiodic CSI-RS resources for an aperiodic TRS in two consecutive slots, the first 2 aperiodic CSI-RS resources are transmitted with relative offset of zero slot and the last 2 aperiodic CSI-RS resources are transmitted with relative offset of one slot. Specifically, each NZP CSI-RS resource is assigned with a resource identity (NZP-CSI-RS-ResourceId). And for a NZP (non-zero power) CSI-RS resource set, a list of NZP CSI-RS resources are configured as a list of their resource ID (NZP-CSI-RS-ResourceId). To map the relative slot offset to the CSI-RS resources, one approach is to map according to the values of resource identities. In the case of 4 NZP CSI-RS resources for 2 consecutive slots, the 2 NZP CSI-RS resources with smaller values of resource identity are transmitted in the first transmission slot and the 2 NZP CSI-RS resources with larger values of resource identity are transmitted in the second transmission slot. Or vice versa. Another approach is to map according to the order of the resource identities in the list of NZP CSI-RS resources of the NZP CSI-RS resource set. In the case of 4 In the case of 4 NZP CSI-RS resources for 2 consecutive slots, a list of the NZP-CSI-RS-ResourceId are configured and noted as {Id_1, Id_2, Id_3, Id-4}. 2 NZP CSI-RS resources corresponding to the first 2 resource identities (i.e. Id_1 and Id_2) are transmitted in the first transmission slot and the 2 NZP CSI-RS resources corresponding to the last 2 resource identifies (i.e. Id_3 and Id_4) are transmitted in the second transmission slot. Or vice versa.

If the aperiodic TRS is configured separately from the associated periodic TRS, it should have the same time and frequency pattern, comb, sequence, bandwidth and frequency location, QCL assumptions, and etc. as the associated periodic TRS. One issue is the QCL relationship between the aperiodic TRS and its associated periodic TRS. For example, in the case of SCell activation, depending on the activation time and the configured periodicity and time or slot offset, aperiodic TRS may or may not be triggered before any periodic TRS transmission was received by the UE. Therefore, one cannot serve as a source RS of QCL assumption for the other. The UE should assume the aperiodic TRS and the associated periodic TRS convey the same fine time and frequency channel information or even have the same antenna port.

With the above discussion, alternatively, a periodic TRS configuration may also be configured to be aperiodic at the same time. Basically a periodic CSI-RS resource set configured with TRS-info will transmit according to its periodicity and time/slot offset. In addition, if it is also configured as aperiodic, it will also transmit according to triggering information carried in DCI of a PDCCH.

In the case an aperiodic TRS is introduced with association with a periodic TRS, to support dynamic beam switching for PDSCH, the relationship between the QCL assumption of aperiodic TRS, periodic TRS, and PDSCH need to be clearly defined.

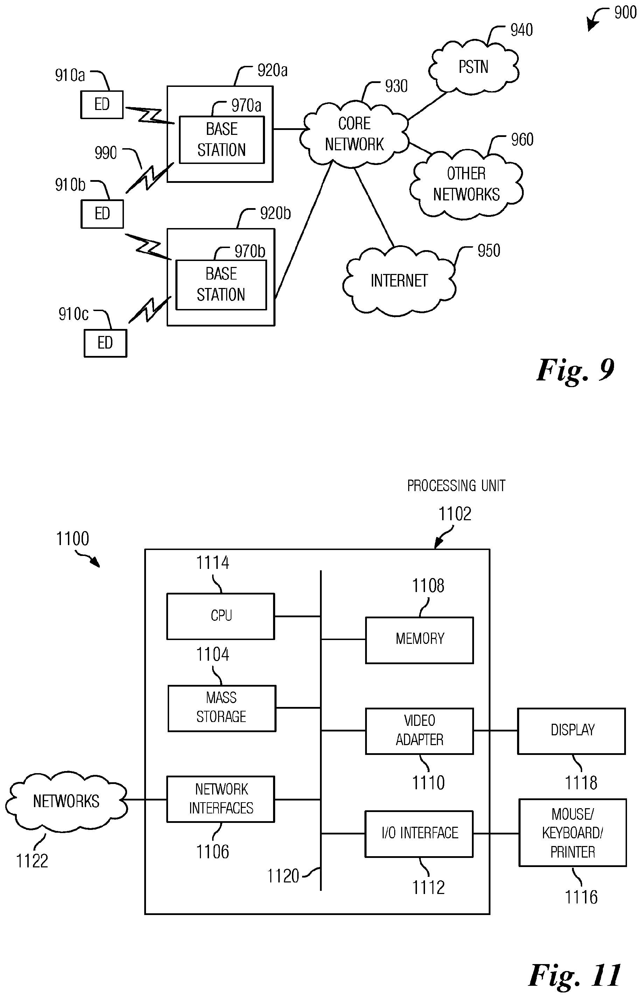

Figure 9 illustrates an example communication system 900. In general, the system 900 enables multiple wireless or wired users to transmit and receive data and other content. The system 900 may implement one or more channel access methods, such as code division multiple access (CDMA), time division multiple access (TDMA), frequency division multiple access (FDMA), orthogonal FDMA (OFDMA), single-carrier FDMA (SC-FDMA), or non-orthogonal multiple access (NOMA).

In this example, the communication system 900 includes electronic devices (ED) 910a-910c, radio access networks (RANs) 920a-920b, a core network 930, a public switched telephone network (PSTN) 940, the Internet 950, and other networks 960. While certain numbers of these components or elements are shown in Figure 9, any number of these components or elements may be included in the system 900.

The EDs 910a-910c are configured to operate or communicate in the system 900. For example, the EDs 910a-910c are configured to transmit or receive via wireless or wired communication channels. Each ED 910a-910c represents any suitable end user device and may include such devices (or may be referred to) as a user equipment or device (UE), wireless transmit or receive unit (WTRU), mobile station, fixed or mobile subscriber unit, cellular telephone, personal digital assistant (PDA), smartphone, laptop, computer, touchpad, wireless sensor, or consumer electronics device.

The RANs 920a-920b here include base stations 970a-970b, respectively. Each base station 970a-970b is configured to wirelessly interface with one or more of the EDs 910a-910c to enable access to the core network 930, the PSTN 940, the Internet 950, or the other networks 960. For example, the base stations 970a-970b may include (or be) one or more of several well-known devices, such as a base transceiver station (BTS), a NodeB (NodeB), an evolved NodeB (eNodeB), a Next Generation (NG) NodeB (gNB), a Home NodeB, a Home eNodeB, a site controller, an access point (AP), or a wireless router. The EDs 910a-910c are configured to interface and communicate with the Internet 950 and may access the core network 930, the PSTN 940, or the other networks 960.

In the embodiment shown in Figure 9, the base station 970a forms part of the RAN 920a, which may include other base stations, elements, or devices. Also, the base station 970b forms part of the RAN 920b, which may include other base stations, elements, or devices. Each base station 970a-970b operates to transmit or receive wireless signals within a particular geographic region or area, sometimes referred to as a "cell." In some embodiments, multiple-input multiple-output (MIMO) technology may be employed having multiple transceivers for each cell.

The base stations 970a-970b communicate with one or more of the EDs 910a-910c over one or more air interfaces 990 using wireless communication links. The air interfaces 990 may utilize any suitable radio access technology.

It is contemplated that the system 900 may use multiple channel access functionality, including such schemes as described above. In particular embodiments, the base stations and EDs implement 5G New Radio (NR), LTE, LTE-A, or LTE-B. Of course, other multiple access schemes and wireless protocols may be utilized.

The RANs 920a-920b are in communication with the core network 930 to provide the EDs 910a-910c with voice, data, application, Voice over Internet Protocol (VoIP), or other services. Understandably, the RANs 920a-920b or the core network 930 may be in direct or indirect communication with one or more other RANs (not shown). The core network 930 may also serve as a gateway access for other networks (such as the PSTN 940, the Internet 950, and the other networks 960). In addition, some or all of the EDs 910a-91oc may include functionality for communicating with different wireless networks over different wireless links using different wireless technologies or protocols. Instead of wireless communication (or in addition thereto), the EDs may communicate via wired communication channels to a service provider or switch (not shown), and to the Internet 950.

Although Figure 9 illustrates one example of a communication system, various changes may be made to Figure 9. For example, the communication system 900 could include any number of EDs, base stations, networks, or other components in any suitable configuration.

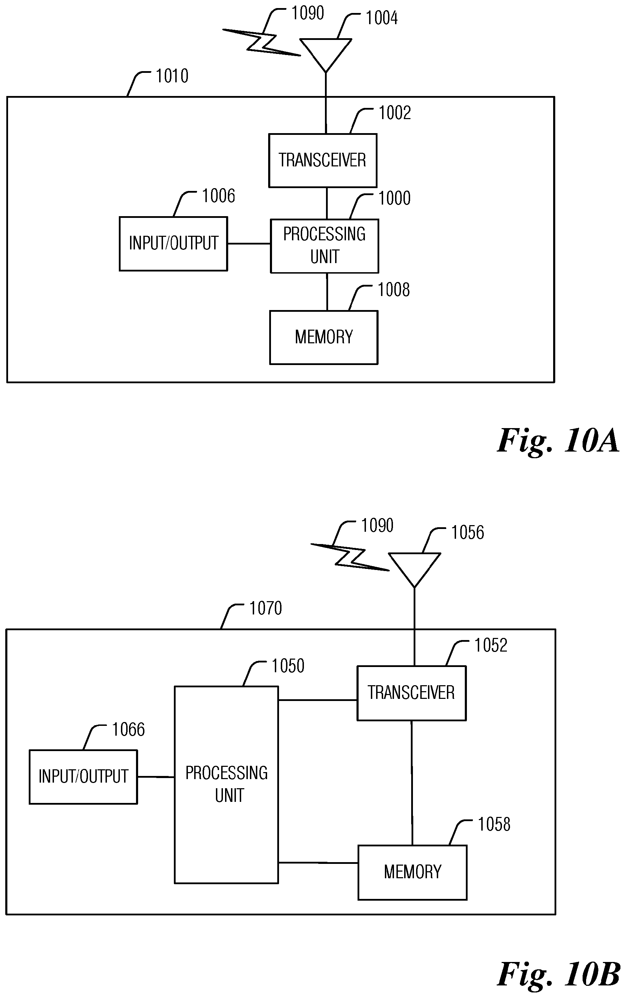

Figures 10A and 10B illustrate example devices that may implement the methods and teachings according to this disclosure. In particular, Figure 10A illustrates an example ED 1010, and Figure 10B illustrates an example base station 1070. These components could be used in the system 900 or in any other suitable system.

As shown in Figure 10A, the ED 1010 includes at least one processing unit 1000. The processing unit 1000 implements various processing operations of the ED 1010. For example, the processing unit 1000 could perform signal coding, data processing, power control, input/output processing, or any other functionality enabling the ED 1010 to operate in the system 900. The processing unit 1000 also supports the methods and teachings described in more detail above. Each processing unit 1000 includes any suitable processing or computing device configured to perform one or more operations. Each processing unit 1000 could, for example, include a microprocessor, microcontroller, digital signal processor, field programmable gate array, or application specific integrated circuit.

The ED 1010 also includes at least one transceiver 1002. The transceiver 1002 is configured to modulate data or other content for transmission by at least one antenna or NIC (Network Interface Controller) 1004. The transceiver 1002 is also configured to demodulate data or other content received by the at least one antenna 1004. Each transceiver 1002 includes any suitable structure for generating signals for wireless or wired transmission or processing signals received wirelessly or by wire. Each antenna 1004 includes any suitable structure for transmitting or receiving wireless or wired signals. One or multiple transceivers 1002 could be used in the ED 1010, and one or multiple antennas 1004 could be used in the ED 1010. Although shown as a single functional unit, a transceiver 1002 could also be implemented using at least one transmitter and at least one separate receiver.

The ED 1010 further includes one or more input/output devices 1006 or interfaces (such as a wired interface to the Internet 950). The input/output devices 1006 facilitate interaction with a user or other devices (network communications) in the network. Each input/output device 1006 includes any suitable structure for providing information to or receiving information from a user, such as a speaker, microphone, keypad, keyboard, display, or touch screen, including network interface communications.

In addition, the ED 1010 includes at least one memory 1008. The memory 1008 stores instructions and data used, generated, or collected by the ED 1010. For example, the memory 1008 could store software or firmware instructions executed by the processing unit(s) 1000 and data used to reduce or eliminate interference in incoming signals. Each memory 1008 includes any suitable volatile or non-volatile storage and retrieval device(s). Any suitable type of memory may be used, such as random access memory (RAM), read only memory (ROM), hard disk, optical disc, subscriber identity module (SIM) card, memory stick, secure digital (SD) memory card, and the like.

As shown in Figure 10B, the base station 1070 includes at least one processing unit 1050, at least one transceiver 1052, which includes functionality for a transmitter and a receiver, one or more antennas 1056, at least one memory 1058, and one or more input/output devices or interfaces 1066. A scheduler, which would be understood by one skilled in the art, is coupled to the processing unit 1050. The scheduler could be included within or operated separately from the base station 1070. The processing unit 1050 implements various processing operations of the base station 1070, such as signal coding, data processing, power control, input/output processing, or any other functionality. The processing unit 1050 can also support the methods and teachings described in more detail above. Each processing unit 1050 includes any suitable processing or computing device configured to perform one or more operations. Each processing unit 1050 could, for example, include a microprocessor, microcontroller, digital signal processor, field programmable gate array, or application specific integrated circuit.

Each transceiver 1052 includes any suitable structure for generating signals for wireless or wired transmission to one or more EDs or other devices. Each transceiver 1052 further includes any suitable structure for processing signals received wirelessly or by wire from one or more EDs or other devices. Although shown combined as a transceiver 1052, a transmitter and a receiver could be separate components. Each antenna 1056 includes any suitable structure for transmitting or receiving wireless or wired signals. While a common antenna 1056 is shown here as being coupled to the transceiver 1052, one or more antennas 1056 could be coupled to the transceiver(s) 1052, allowing separate antennas 1056 to be coupled to the transmitter and the receiver if equipped as separate components. Each memory 1058 includes any suitable volatile or non-volatile storage and retrieval device(s). Each input/output device 1066 facilitates interaction with a user or other devices (network communications) in the network. Each input/output device 1066 includes any suitable structure for providing information to or receiving/providing information from a user, including network interface communications.

Figure 11 is a block diagram of a computing system 1100 that may be used for implementing the devices and methods disclosed herein. For example, the computing system can be any entity of UE, access network (AN), mobility management (MM), session management (SM), user plane gateway (UPGW), or access stratum (AS). Specific devices may utilize all of the components shown or only a subset of the components, and levels of integration may vary from device to device. Furthermore, a device may contain multiple instances of a component, such as multiple processing units, processors, memories, transmitters, receivers, etc. The computing system 1100 includes a processing unit 1102. The processing unit includes a central processing unit (CPU) 1114, memory 1108, and may further include a mass storage device 1104, a video adapter 1110, and an I/O interface 1112 connected to a bus 1120.

The bus 1120 may be one or more of any type of several bus architectures including a memory bus or memory controller, a peripheral bus, or a video bus. The CPU 1114 may comprise any type of electronic data processor. The memory 1108 may comprise any type of non-transitory system memory such as static random access memory (SRAM), dynamic random access memory (DRAM), synchronous DRAM (SDRAM), read-only memory (ROM), or a combination thereof. In an embodiment, the memory 1108 may include ROM for use at boot-up, and DRAM for program and data storage for use while executing programs.

The mass storage 1104 may comprise any type of non-transitory storage device configured to store data, programs, and other information and to make the data, programs, and other information accessible via the bus 1120. The mass storage 1104 may comprise, for example, one or more of a solid state drive, hard disk drive, a magnetic disk drive, or an optical disk drive.

The video adapter 1110 and the I/O interface 1112 provide interfaces to couple external input and output devices to the processing unit 1102. As illustrated, examples of input and output devices include a display 1118 coupled to the video adapter 1110 and a mouse, keyboard, or printer 1116 coupled to the I/O interface 1112. Other devices may be coupled to the processing unit 1102, and additional or fewer interface cards may be utilized. For example, a serial interface such as Universal Serial Bus (USB) (not shown) may be used to provide an interface for an external device.

The processing unit 1102 also includes one or more network interfaces 1106, which may comprise wired links, such as an Ethernet cable, or wireless links to access nodes or different networks. The network interfaces 1106 allow the processing unit 1102 to communicate with remote units via the networks. For example, the network interfaces 1106 may provide wireless communication via one or more transmitters/transmit antennas and one or more receivers/receive antennas. In an embodiment, the processing unit 1102 is coupled to a local-area network 1122 or a wide-area network for data processing and communications with remote devices, such as other processing units, the Internet, or remote storage facilities.

Figure 12 illustrates an example wireless communications system 1200. Communications system 1200 includes an access node 1205 serving a plurality of user equipment (UE), including UEs 1210, 1212, 1214, and 1216. In a first operating mode, communications to and from UE 1210 pass through access node 1205. In a second operating mode, communications to and from UE 1210 do not pass through access node 1205, however, access node 1205 typically allocates resources used by UE 1210 to communicate. Access nodes may also be commonly referred to as Node Bs, evolved Node Bs (eNBs), next generation (NG) Node Bs (gNBs), master eNBs (MeNBs), secondary eNBs (SeNBs), master gNBs (MgNBs), secondary gNBs (SgNBs), network controllers, control nodes, base stations, access points, transmission points (TPs), transmission-reception points (TRPs), cells, carriers, macro cells, femtocells, pico cells, and so on, while UEs may also be commonly referred to as mobile stations, mobiles, terminals, users, subscribers, stations, and the like. Access nodes may provide wireless access in accordance with one or more wireless communication protocols, e.g., the Third Generation Partnership Project (3GPP) long term evolution (LTE), LTE advanced (LTE-A), 5G, 5G LTE, 5G NR, High Speed Packet Access (HSPA), Wi-Fi 802.11a/b/g/n/ac/ad/ax/ay, etc. While it is understood that communications systems may employ multiple eNBs capable of communicating with a number of UEs, only one eNB and six UE are illustrated for simplicity.

It should be appreciated that one or more steps of the embodiment methods provided herein may be performed by corresponding units or modules. For example, a signal may be transmitted by a transmitting unit or a transmitting module. A signal may be received by a receiving unit or a receiving module. A signal may be processed by a processing unit or a processing module. The respective units or modules may be hardware, software, or a combination thereof. For instance, one or more of the units or modules may be an integrated circuit, such as field programmable gate arrays (FPGAs) or application-specific integrated circuits (ASICs).

Although the present disclosure and its advantages have been described in detail, it should be understood that various changes, substitutions and alterations can be made herein without departing from the scope of the disclosure as defined by the appended claims.

## Claims

1. A method implemented by an access node, the method comprising:
transmitting (707), by the access node, a trigger for an aperiodic tracking reference signal, TRS, associated with a periodic TRS; and
transmitting (711), by the access node, the aperiodic TRS in accordance with the trigger;
further comprising configuring, by the access node, a user equipment,UE, with multiple sets of aperiodic TRSs for different quasi-co-located, QCL, assumptions,
wherein the association between the aperiodic TRS and the periodic TRS comprises the aperiodic TRS and the periodic TRS having a same bandwidth;
wherein the association between the aperiodic TRS and the periodic TRS further comprises the aperiodic TRS and the periodic TRS having a QCL relationship; and
wherein the aperiodic TRS comprises a set of 4 one-port channel state information reference, CSI-RS, resources in two consecutive slots, each of the CSI-RS resources is configured with a slot offset relative to a first transmission slot, and with the 4 CSI-RS resources for the aperiodic TRS, 2 of the CSI-RS resources are configured with relative offset of zero slot and the other 2 with relative offset of one slot.

2. The method of claim 1, wherein a first two CSI-RS resources in the set of 4 one-port CSI-RS resources is in a first slot of the two consecutive slots.

3. A method implemented by a user equipment, UE, the method comprising:
receiving (805), by the UE, a trigger for an aperiodic tracking reference signal, TRS, associated with a periodic TRS; and
receiving (807), by the UE, the aperiodic TRS in accordance with the trigger;
further comprising receiving, by the UE, a configuration message with multiple sets of aperiodic TRSs for different quasi-co-located, QCL, assumptions;
wherein the association between the aperiodic TRS and the periodic TRS comprises the aperiodic TRS and the periodic TRS having a same bandwidth;
wherein the association between the aperiodic TRS and the periodic TRS further comprises the aperiodic TRS and the periodic TRS having a QCL relationship; and
wherein the aperiodic TRS comprises a set of 4 one-port channel state information reference, CSI-RS, resources in two consecutive slots, each of the CSI-RS resources is configured with a slot offset relative to a first transmission slot, and with the 4 CSI-RS resources for the aperiodic TRS, 2 of the CSI-RS resources are configured with relative offset of zero slot and the other 2 with relative offset of one slot.

4. The method of claim 3, wherein a first two CSI-RS resources in the set of 4 one-port CSI-RS resources is in a first slot of the two consecutive slots.

5. A computer readable medium that comprises instructions to implement any of the methods of claims 1-4.

6. An access node, the access node comprising:
a non-transitory memory storage comprising instructions, and one or more processors in communication with the memory storage, and the one or more processors execute the instructions to perform the method according to claim 1 or claim 2.

7. A user equipment, UE, the UE comprising:
a non-transitory memory storage comprising instructions, and one or more processors in communication with the memory storage, and the one or more processors execute the instructions to perform the method according to claim 3 or claim 4.

## Patentansprüche

1. Verfahren, das in einem Zugriffsknoten implementiert wird, wobei das Verfahren Folgendes umfasst:
Übertragen (707) eines Triggers für ein aperiodisches Nachführungsreferenzsignal (Tracking Reference Signal, TRS), das einem periodischen TRS zugeordnet ist, durch den Zugriffsknoten; und
Übertragen (711) des aperiodischen TRS gemäß dem Trigger durch den Zugriffsknoten;
ferner umfassend Konfigurieren eines Benutzergeräts (User Equipment, UE) mit mehreren Sätzen aperiodischer TRSs für unterschiedliche quasi-kolokalisierte Annahmen (Quasi-Co-Located-, QCL-Annahmen) durch den Zugriffsknoten,
wobei die Zuordnung des aperiodischen TRS zu dem periodischen TRS umfasst, dass das aperiodische TRS und das periodische TRS dieselbe Bandbreite aufweisen;
wobei die Zuordnung des aperiodischen TRS zu dem periodischen TRS ferner umfasst, dass das aperiodische TRS und das periodische TRS eine QCL-Beziehung aufweisen; und
wobei das aperiodische TRS in zwei aufeinanderfolgenden Zeitschlitzen einen Satz aus 4 Kanalzustandsinformationsreferenzressourcen (Channel State Information Reference-, CSI-RS-Ressourcen) für einen Port umfasst, jede der CSI-RS-Ressourcen mit einem Zeitschlitzversatz bezüglich eines ersten Übertragungszeitschlitzes konfiguriert ist und bei den 4 CSI-RS-Ressourcen für das aperiodische TRS 2 der CSI-RS-Ressourcen mit einem relativen Versatz von null Zeitschlitzen und die anderen 2 mit einem relativen Versatz von einem Zeitschlitz konfiguriert sind.

2. Verfahren nach Anspruch 1, wobei sich erste zwei CSI-RS-Ressourcen in dem Satz aus 4 CSI-RS-Ressourcen für einen Port in einem ersten Zeitschlitz der beiden aufeinanderfolgenden Zeitschlitze befinden.

3. Verfahren, das durch ein Benutzergerät (UE) implementiert wird, wobei das Verfahren Folgendes umfasst:
Empfangen (805) eines Triggers für ein aperiodisches Nachführungsreferenzsignal (TRS), das einem periodischen TRS zugeordnet ist, durch das UE; und
Empfangen (807) des aperiodischen TRS gemäß dem Trigger durch das UE;
ferner umfassend Empfangen einer Konfigurationsnachricht mit mehreren Sätzen aperiodischer TRSs für unterschiedliche quasi-kolokalisierte Annahmen (QCL-Annahmen) durch das UE;
wobei die Zuordnung des aperiodischen TRS zu dem periodischen TRS umfasst, dass das aperiodische TRS und das periodische TRS dieselbe Bandbreite aufweisen;
wobei die Zuordnung des aperiodischen TRS zu dem periodischen TRS ferner umfasst, dass das aperiodische TRS und das periodische TRS eine QCL-Beziehung aufweisen; und
wobei das aperiodische TRS in zwei aufeinanderfolgenden Zeitschlitzen einen Satz aus 4 Kanalzustandsinformationsreferenzressourcen (Channel State Information Reference-, CSI-RS-Ressourcen) für einen Port umfasst, jede der CSI-RS-Ressourcen mit einem Zeitschlitzversatz bezüglich eines ersten Übertragungszeitschlitzes konfiguriert ist und bei den 4 CSI-RS-Ressourcen für das aperiodische TRS 2 der CSI-RS-Ressourcen mit einem relativen Versatz von null Zeitschlitzen und die anderen 2 mit einem relativen Versatz von einem Zeitschlitz konfiguriert sind.

4. Verfahren nach Anspruch 3, wobei sich erste zwei CSI-RS-Ressourcen in dem Satz aus 4 CSI-RS-Ressourcen für einen Port in einem ersten Zeitschlitz der beiden aufeinanderfolgenden Zeitschlitze befinden.

5. Computerlesbares Medium, das Anweisungen zum Implementieren eines der Verfahren nach einem der Ansprüche 1 bis 4 umfasst.

6. Zugriffsknoten, wobei der Zugriffsknoten Folgendes umfasst:
einen nichtflüchtigen Speicher, der Anweisungen umfasst, und einen oder mehrere mit dem Speicher in Verbindung stehende Prozessoren, wobei der eine oder die mehrere Prozessoren die Anweisungen ausführen, um das Verfahren nach Anspruch 1 oder Anspruch 2 durchzuführen.

7. Benutzergerät (UE), wobei das UE Folgendes umfasst:
einen nichtflüchtigen Speicher, der Anweisungen umfasst, und einen oder mehrere mit dem Speicher in Verbindung stehende Prozessoren, wobei der eine oder die mehrere Prozessoren die Anweisungen ausführen, um das Verfahren nach Anspruch 3 oder Anspruch 4 durchzuführen.

## Revendications

1. Procédé mis en œuvre par un nœud d'accès, le procédé comprenant :
la transmission (707), par le nœud d'accès, d'un déclencheur pour un signal de référence de suivi apériodique, TRS, associé à un TRS périodique ; et
la transmission (711), par le nœud d'accès, du TRS apériodique conformément au déclencheur ;
comprenant également la configuration, par le nœud d'accès, d'un équipement utilisateur, UE, avec de multiples ensembles de TRS apériodiques pour différentes hypothèses quasi-colocalisées, QCL,
dans lequel l'association entre le TRS apériodique et le TRS périodique comprend le TRS apériodique et le TRS périodique présentant une même bande passante ;
dans lequel l'association entre le TRS apériodique et le TRS périodique comprend également le TRS apériodique et le TRS périodique présentant une relation QCL ; et
dans lequel le TRS apériodique comprend un ensemble de 4 ressources de référence d'informations d'état de canal à un port, CSI-RS, dans deux créneaux consécutifs, chacune des ressources CSI-RS est configurée avec un décalage de créneau par rapport à un premier créneau de transmission, et avec les 4 ressources CSI-RS pour le TRS apériodique, 2 des ressources CSI-RS sont configurées avec un décalage relatif de zéro créneau et les 2 autres avec un décalage relatif d'un créneau.

2. Procédé selon la revendication 1, dans lequel deux premières ressources CSI-RS dans l'ensemble de 4 ressources CSI-RS à un port se trouvent dans un premier créneau des deux créneaux consécutifs.

3. Procédé mis en œuvre par un équipement utilisateur, UE, le procédé comprenant :
la réception (805), par l'UE, d'un déclencheur pour un signal de référence de suivi apériodique, TRS, associé à un TRS périodique ; et
la réception (807), par l'UE, du TRS apériodique conformément au déclencheur ;
comprenant également la réception, par l'UE, d'un message de configuration avec de multiples ensembles de TRS apériodiques pour différentes hypothèses quasi-colocalisées, QCL ;
dans lequel l'association entre le TRS apériodique et le TRS périodique comprend le TRS apériodique et le TRS périodique présentant une même bande passante ;
dans lequel l'association entre le TRS apériodique et le TRS périodique comprend également le TRS apériodique et le TRS périodique présentant une relation QCL ; et
dans lequel le TRS apériodique comprend un ensemble de 4 ressources de référence d'informations d'état de canal à un port, CSI-RS, dans deux créneaux consécutifs, chacune des ressources CSI-RS est configurée avec un décalage de créneau par rapport à un premier créneau de transmission, et avec les 4 ressources CSI-RS pour le TRS apériodique, 2 des ressources CSI-RS sont configurées avec un décalage relatif de zéro créneau et les 2 autres avec un décalage relatif d'un créneau.

4. Procédé selon la revendication 3, dans lequel deux premières ressources CSI-RS dans l'ensemble de 4 ressources CSI-RS à un port se trouvent dans un premier créneau des deux créneaux consécutifs.

5. Support lisible par ordinateur qui comprend des instructions pour mettre en œuvre l'un quelconque des procédés selon les revendications 1 à 4.

6. Nœud d'accès, le nœud d'accès comprenant :
un stockage de mémoire non transitoire comprenant des instructions, et un ou plusieurs processeurs en communication avec le stockage de mémoire, et les un ou plusieurs processeurs exécutent les instructions pour réaliser le procédé selon la revendication 1 ou la revendication 2.

7. Équipement utilisateur, UE, l'UE comprenant :
un stockage de mémoire non transitoire comprenant des instructions, et un ou plusieurs processeurs en communication avec le stockage de mémoire, et les un ou plusieurs processeurs exécutent les instructions pour réaliser le procédé selon la revendication 3 ou la revendication 4.
